# DEMANDE DE BREVET EUROPEEN

(11) **EP 4 775 103 A1**
(43) Date de publication de la demande: **15.07.2026**
(21) Numéro de dépôt: 26150947.5
(22) Date de dépôt: 09.01.2026
(51) Int. Cl.: A47J 37/06

(54) **RECHAUD A RACLETTE AUTONOME**

(30) Priorité: 09.01.2025 EP 25150945
(71) Demandeur: Bédat, Xavier Michel Georges, 2952 Cornol (CH)
(72) Inventeur: Bédat, Xavier Michel Georges, 2952 Cornol (CH)
(74) Mandataire: AWA Switzerland

(57) **Abrégé**

L'invention concerne un dispositif portable (1) destiné à faire fondre des portions de fromage (7), ledit dispositif portable (1) comprenant :
-un premier plateau (2) destiné à accueillir au moins une source de chaleur (6) sans apport d'électricité,
-un deuxième plateau (3) surmontant le premier plateau (2), le deuxième plateau (3) comprenant des alvéoles (3a) destinées à recevoir en contact direct les portions de fromage (7),
-une tige de support (4) définissant un axe reliant le premier plateau (2) et le deuxième plateau (3).

## Description

### Domaine technique de l'invention

La présente invention se rapporte à un dispositif portable, autonome en énergie et de préférence démontable, aussi appelé réchaud à raclette autonome, permettant de faire fondre de petites portions de fromage.

### Arrière-plan technologique

A ce jour, la plupart des dispositifs de table pour faire fondre de manière autonome des portions de fromage nécessitent l'utilisation de poêlons amovibles. Pour sortir le fromage fondu des poêlons, il est nécessaire d'utiliser une spatule et de déposer la portion de fromage fondu sur un support rigide. La dégustation de fromage fondu nécessite donc l'utilisation de plusieurs objets en plus de la source de chaleur et de son support ce qui est un facteur limitant pour déguster du fromage fondu simplement, rapidement et partout.

### Résumé de l'invention

La présente invention vise à fournir une solution simple et rapide pour déguster du fromage fondu dans tout endroit qu'il soit extérieur ou intérieur.

Plus spécifiquement, l'invention concerne un dispositif portable destiné à faire fondre des portions de fromage, ledit dispositif portable comprenant :
- un premier plateau destiné à accueillir au moins une source de chaleur sans apport d'électricité,
- un deuxième plateau surmontant le premier plateau, le deuxième plateau comprenant des alvéoles destinées à recevoir en contact direct les portions de fromage,
- une tige de support définissant un axe reliant le premier plateau et le deuxième plateau.

Selon des variantes préférées, le dispositif portable présente une ou plusieurs des caractéristiques suivantes :
- le premier plateau comporte au moins un logement destiné à accueillir au moins une source de chaleur sans apport d'électricité;
- le premier plateau comporte plusieurs logements avec un nombre de logements correspondant au nombre d'alvéoles du deuxième plateau, les logements du premier plateau étant disposés en regard des alvéoles selon l'axe défini par la tige de support;
- le premier plateau et/ou le deuxième plateau sont montés démontables sur la tige de support;
- la tige de support est montée sur le premier plateau et/ou sur le deuxième plateau à l'aide d'un pas de vis;
- il comprend un écrou vissé sur la tige de support pour fixés ensemble le premier plateau, le deuxième plateau et la tige de support;
- il comprend une zone de préhension;
- la zone de préhension est disposée à une extrémité de la tige de support;
- l'écrou fait office de zone de préhension;
- ladite au moins une source de chaleur est une bougie;
- la distance entre le premier plateau et le deuxième plateau est comprise entre 3 et 10 cm, de préférence entre 3 et 5 cm;
- il est dépourvu de poêlons pour recevoir les portions de fromage dans les alvéoles.

Le dispositif ne nécessite pas l'utilisation de poêlons et de support rigide pour déposer le fromage avant dégustation. Un objet usuel tel qu'une cuillère permet de faire glisser le fromage fondu directement sur un support comestible tel que du pain. Les différents éléments du réchaud, une fois démontés peuvent être nettoyés aisément.

Ce dispositif peut ainsi être facilement utilisé en tout lieu sans nécessité d'apport d'électricité ou d'ustensiles particuliers.

### Brève description des figures

La figure 1 représente une vue tridimensionnelle du réchaud à fromage selon l'invention.
La figure 2 représente une vue tridimensionnelle du plateau de base du réchaud à fromage selon l'invention.
La figure 3 représente une vue tridimensionnelle du plateau alvéolé du réchaud à fromage selon l'invention.
La figure 4A représente une vue tridimensionnelle de la tige de support du réchaud à fromage selon l'invention.
La figure 4B représente une vue de côté de la tige de support du réchaud à fromage selon l'invention.
La figure 5 représente une vue tridimensionnelle de l'écrou du réchaud à fromage selon l'invention, faisant office de moyen de fixation et de zone de préhension.

### Description détaillée de l'invention

Le dispositif selon l'invention est destiné à faire fondre des portions de fromage de type fromage à raclette. Ce dispositif peut également être qualifié de réchaud à fromage ou de réchaud à raclette. Ce dispositif est portable et préférentiellement démontable. On entend par portable qu'il peut être aisément agrippé pour être déplacé d'un endroit à un autre.

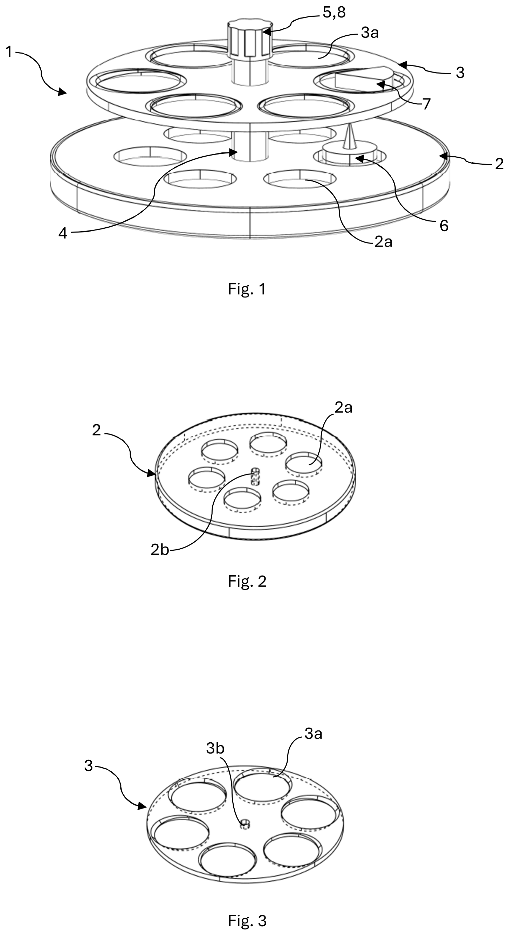

Le dispositif 1 selon l'invention visible à la figure 1 comporte un plateau de base 2 surmonté d'un plateau alvéolé 3, les deux étant reliés par une tige de support 4, préférentiellement surmontée d'une zone de préhension 5.

Le plateau de base 2 visible à la figure 2 est destiné à recevoir respectivement la ou les source(s) de chaleur 6 (fig.1) ne nécessitant pas d'apport d'électricité. Il peut par exemple s'agir de bougies._Préférentiellement, le plateau de base est muni d'un ou plusieurs logement(s) 2a accueillant respectivement la ou les source(s) de chaleur. De préférence, le nombre de logements est égal au nombre d'alvéoles du plateau alvéolé décrit ci-après. Plus préférentiellement, les logements des sources de chaleur sont disposés en regard des alvéoles destinées à recevoir le fromage. Il est aussi envisageable que le plateau de base comporte un seul grand logement recevant une source de chaleur ou une pluralité de sources de chaleur. Selon une variante non représentée, le plateau de base peut être formé de deux plateaux superposés avec le plateau en position supérieure, c.à.d. celui en regard du plateau alvéolé, muni du ou des logement(s). Selon une autre variante non représentée et non préférée, il est également envisageable de placer la source ou les source(s) de chaleur sur le plateau de base dépourvu de logements. Selon l'invention, le plateau de base 2 est muni en son centre d'un trou traversant ou borgne 2b accueillant la tige de support. Pour une version non démontable du dispositif, la tige de support peut être solidaire du plateau de base, sans que cela nécessite la présence d'un trou accueillant la base de la tige. A titre d'exemple, le plateau de base peut être réalisé en bois, en céramique, dans un alliage métallique ou en métal.

Le plateau alvéolé 3 visible à la figure 3 comporte plusieurs alvéoles 3a destinées à accueillir les portions de fromage à fondre 7 (fig.1). Les portions de fromage sont en contact direct avec la surface des alvéoles sans présence de poêlons. Préférentiellement, le plateau alvéolé est réalisé dans un matériau métallique recouvert au moins au niveau des alvéoles d'une couche d'un matériau antiadhérent dont l'utilisation est compatible avec les denrées alimentaires et qui est résistant à la chaleur générée par les bougies. Par exemple, il peut s'agir du polytétrafluoroéthylène. Selon l'invention, le plateau alvéolé 3 est muni en son centre d'un trou traversant ou borgne 3b accueillant la tige de support. Pour une version non démontable du dispositif, la tige de support peut être solidaire du plateau alvéolé, sans que cela nécessite la présence d'un trou accueillant la base de la tige de support.

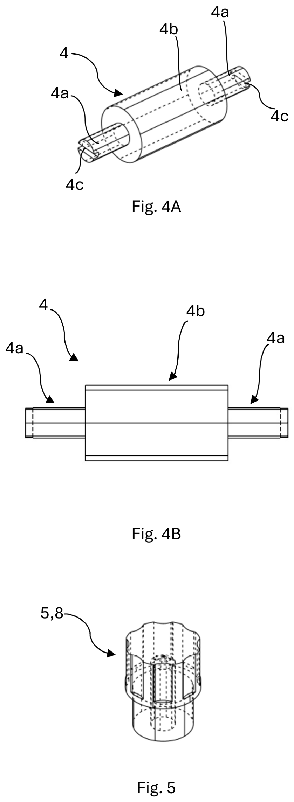

Le plateau alvéolé et/ou le plateau de base sont fixés sur la tige de support préférentiellement de manière démontable, par exemple via un pas de vis. Il est également envisageable que le plateau alvéolé soit monté rotatif autour de la tige. De préférence, le plateau alvéolé et le plateau de base sont montés de manière démontable. A cet effet, les trous du plateau de base et du plateau alvéolé peuvent être des trous filetés se vissant sur les extrémités de la tige de support 4 munie d'une partie filetée 4a (figs 4A et 4B). Ces parties filetées 4a peuvent être de diamètre inférieur à celle du corps central 4b de la tige de support. Optionnellement, la tige de support peut comporter à ses extrémités une encoche 4c pour introduire un outil tel qu'un tournevis, facilitant le démontage. L'ensemble formé du plateau de base, du plateau alvéolé et de la tige de support est fixé avec un moyen de fixation tel qu'un écrou 8 (figs 1 et 5) qui se positionne à une extrémité de la tige du côté extérieur au plateau alvéolé. Cet écrou fait également office de zone de préhension 5 pour déplacer le dispositif. En variante, une poignée peut être solidaire du moyen de fixation. Pour la variante non démontable, une poignée de transport peut être solidaire de la tige ou fixée sur la tige au niveau du plateau alvéolé côté extérieur.

Dans l'exemple illustré, le plateau de base et le plateau alvéolé sont de forme circulaire. On précisera que d'autres formes sont envisageables. A titre indicatif, le plateau de base peut typiquement avoir un diamètre compris entre 10 et 40 cm, de préférence entre 15 et 25 cm pour faciliter le déplacement du dispositif et le plateau alvéolé peut typiquement avoir un diamètre compris entre 10 et 40 cm, de préférence entre 15 et 20 cm. Pour garantir, un apport de chaleur suffisant sur le plateau alvéolé depuis le plateau de base, la distance entre le plateau de base et le plateau alvéolé est préférentiellement maintenue à une valeur inférieure ou égale à 10 cm, de préférence inférieure ou égale à 5 cm. Pour éviter un contact direct de la flamme avec la face intérieure du plateau alvéolé, cette distance est supérieure ou égale à 3 cm. En présence de bougies hautes qui dépassent du plan du plateau de base, la valeur minimale entre les deux plateaux est adaptée pour que la distance entre la surface de la bougie sans la mèche et le plateau alvéolé soit supérieure ou égale à 3 cm.

En utilisation, les portions de fromage sont placées dans les alvéoles. Lorsque le fromage est fondu, il peut être pris par le consommateur via un morceau de pain, une cuillère, etc.

## Revendications

1. Dispositif portable (1) destiné à faire fondre des portions de fromage (7), ledit dispositif portable (1) comprenant :
- un premier plateau (2) destiné à accueillir au moins une source de chaleur (6) sans apport d'électricité,
- un deuxième plateau (3) surmontant le premier plateau (2), le deuxième plateau (3) comprenant des alvéoles (3a) destinées à recevoir en contact direct les portions de fromage (7),
- une tige de support (4) définissant un axe reliant le premier plateau (2) et le deuxième plateau (3).

2. Dispositif portable (1) selon la revendication précédente, pour lequel le premier plateau (2) comporte au moins un logement (2a) destiné à accueillir au moins une source de chaleur (6) sans apport d'électricité.

3. Dispositif portable (1) selon la revendication précédente, pour lequel le premier plateau (2) comporte plusieurs logements (2a) avec un nombre de logements (2a) correspondant au nombre d'alvéoles (3a) du deuxième plateau (3), les logements (2a) du premier plateau (2) étant disposés en regard des alvéoles (3a) selon l'axe défini par la tige de support (4).

4. Dispositif portable (1) selon l'une des revendications précédentes, pour lequel le premier plateau (2) et/ou le deuxième plateau (3) sont montés démontables sur la tige de support (4).

5. Dispositif portable (1) selon la revendication précédente, pour lequel la tige de support (4) est montée sur le premier plateau (2) et/ou sur le deuxième plateau (3) à l'aide d'un pas de vis.

6. Dispositif portable (1) selon la revendication précédente, comprenant un écrou (8) vissé sur la tige de support (4) pour fixés ensemble le premier plateau (2), le deuxième plateau (3) et la tige de support (4).

7. Dispositif portable (1) selon l'une des revendications précédentes, comprenant une zone de préhension (5).

8. Dispositif portable (1) selon la revendication précédente, pour lequel la zone de préhension (5) est disposée à une extrémité de la tige de support (4).

9. Dispositif portable (1) selon la revendication 8, pour lequel l'écrou (8) fait office de zone de préhension (5).

10. Dispositif portable (1) selon l'une des revendications précédentes, pour lequel ladite au moins une source de chaleur (6) est une bougie.

11. Dispositif portable (1) selon l'une des revendications précédentes, pour lequel la distance entre le premier plateau (2) et le deuxième plateau (3) est comprise entre 3 et 10 cm, de préférence entre 3 et 5 cm.

12. Dispositif portable (1) selon l'une des revendications précédentes, lequel étant dépourvu de poêlons pour recevoir les portions de fromage (7) dans les alvéoles (3a).
